**Europäisches Patentamt**

**European Patent Office**

**Office européen des brevets**

(19)

(11) Veröffentlichungsnummer: **0 330 054**

**A1**

(12) # EUROPÄISCHE PATENTANMELDUNG

(21) Anmeldenummer: **89102528.0**

(22) Anmeldetag: **14.02.89**

(51) Int. Cl.⁴: **F16J 13/08 , B25B 5/12 , F22B 37/22**

(30) Priorität: **23.02.88 DE 8802326 U**

(43) Veröffentlichungstag der Anmeldung:
**30.08.89 Patentblatt 89/35**

(84) Benannte Vertragsstaaten:
**BE CH DE ES FR IT LI SE**

(71) Anmelder: **Siemens Aktiengesellschaft
Wittelsbacherplatz 2
D-8000 München 2(DE)**

(72) Erfinder: **Stauner, Jakob
Schlossgartenstrasse 4
D-8500 Nürnberg 90(DE)**

(54) **Schnellspannvorrichtung zur lösbaren Verbindung zweier Bauteile.**

(57) Ein an dem eine Ende mit einem Kopf (18) und an dem anderen Ende mit einem Verankerungsmittel versehener Bolzen (12) ist durch eine Öffnung (3a) in dem ersten Bauteil (3) (z.B. Dichtscheibe) hindurchgeführt und in einer Öffnung (4a) im zweiten Bauteil (4) (z.B. Rohrstütze eines Dampferzeugers) verankerbar. Zum Erzeugen einer Spannkraft zwischen dem Kopf (18) und dem ersten Bauteil (3) dient eine Hebelanordnung, die über eine Stange (1) mit dem Kolben (2) eines Zylinders (5) verbunden ist, welcher durch ein Druckmittel betätigbar und an dem ersten Bauteil (3) angeordnet ist.

FIG 1

EP 0 330 054 A1

## Schnellspannvorrichtung zur lösbaren Verbindung zweier Bauteile

Die Erfindung bezieht sich auf eine Schnellspannvorrichtung zur lösbaren Verbindung zweier Bauteile und ist beispielsweise anwendbar zum Befestigen eines Deckels an einem Behälter oder zum Anbringen einer Dichtscheibe an einem in einen Dampferzeuger mündenden Rohrstutzen.

Aus der EP-A-O 014 878 ist es bekannt, eine Dichtscheibe an ihren Umfang mit radial verschiebbaren Riegeln zu versehen, die nach dem Einbringen der Dichtscheibe in einen Rohrstutzen mit Aussparungen am Innenumfang des Rohrstutzens in Eingriff gebracht werden.

Der Erfindung liegt die Aufgabe zugrunde, eine Vorrichtung anzugeben, mit der zwei Bauteile in einfacher Weise und schnell miteinander verspannt werden können. Bei Anordnung einer Dichtung zwischen den beiden Bauteilen soll eine flüssigkeits- und/oder gasdichte lösbare Verbindung möglich sein.

Diese Aufgabe wird erfindungsgemäß durch eine Schnellspannvorrichtung zur lösbaren Verbindung zweier Bauteile gelöst, bei der ein an dem einen Ende mit einem Kopf und an dem anderen Ende mit einem Verankerungsmittel versehener Bolzen durch eine Öffnung in dem ersten Bauteil hindurchgeführt und in einer Öffnung im zweiten Bauteil verankerbar ist und zur Erzeugung einer Spannkraft zwischen dem Kopf und dem ersten Bauteil eine Hebelanordnung dient, die über eine Stange mit dem Kolben eines Zylinders verbunden ist, welcher durch ein Druckmittel betätigbar und an dem ersten Bauteil angeordnet ist.

Auf diese Weise ist im Gegensatz zu der bekannten Verbindung zweier Bauelemente mittels Riegeln mit einfachen Mitteln eine gas- oder flüssigkeitsdichte Verbindung herstellbar. Gegenüber einer Verbindung, die durch Eindrehen von Schraubenbolzen herstellbar ist, wird vermieden, daß beim Aufbringen des Anpreßdruckes zwischen den beiden Bauteilen die Spannelemente in der Halterung fressen und die Verbindung beeinträchtigt wird oder die Verbindungsmittel unbrauchbar werden.

Die Erfindung wird anhand der in der Zeichnung dargestellten Ausführungsbeispiele näher erläutert. Darin zeigen:

FIG 1 eine lösbare Verbindung zweier Bauteile durch eine Schnellspannvorrichtung,

FIG 2 eine andere Ausbildung der Schnellspannvorrichtung,

FIG 3 die Befestigung einer Dichtscheibe an der Mündung eines Rohrstutzens,

FIG. 4 ein weiteres Ausführungsbeispiel einer Verbindung zweier Bauteile mittels eines Schnellspanngliedes in der Ausgangsstellung,

FIG 5 das Schnellspannglied gemäß FIG 4 in Arretierstellung und

FIG 6 eine Seitenansicht zu FIG 5.

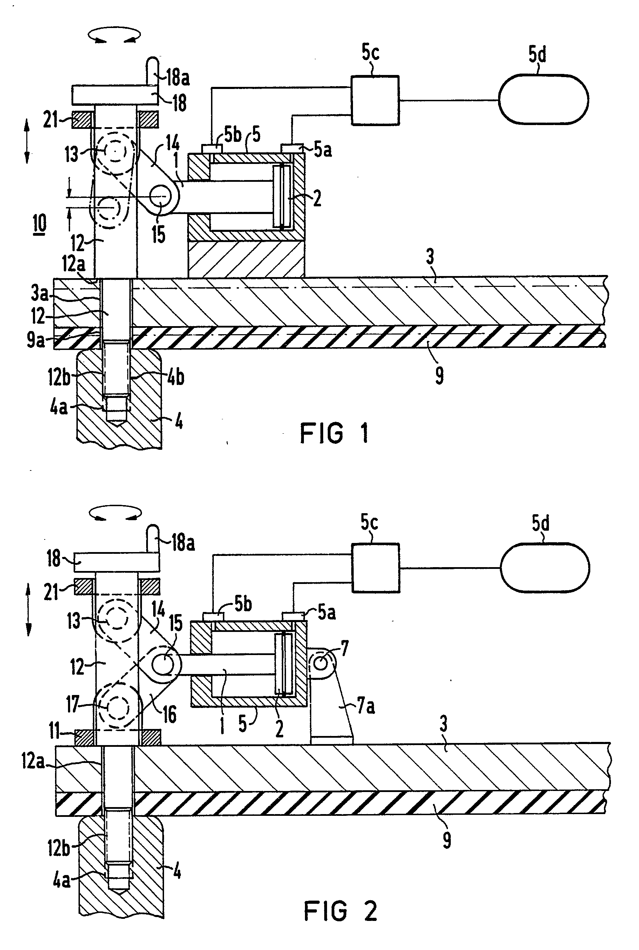

In FIG 1 ist eine Vorrichtung gezeigt, die es gestattet, an einem Bauteil 4, beispielsweise an der Öffnung eines Behälters, ein als Scheibe ausgebildetes Bauteil 3 unter Zwischenlage einer Dichtung 9 mittels Schnellspanngliedern 10 zu befestigen. Am Rand des Bauteiles 3 und der Dichtung 9 sind zylindrische Öffnungen 3a bzw. 9a vorgesehen. Das Bauteil 4 hat als zylindrische Bohrungen ausgebildete Öffnungen 4a, die deckungsgleich mit den Öffnungen 3a ausgebildet und angeordnet sind.

Ein Bolzen 12 des Schnellspanngliedes 10 ragt durch die Öffnung 3a in der Scheibe 3 und durch die Öffnung 9a in der Dichtung 9 hindurch und ist in das Gewinde 4b der als Bohrung ausgebildeten Öffnungen 4a soweit eingedreht, daß der Bolzen 12 mit seiner bundartigen Verdickung 12a die Außenseite des Bauteils 3 gerade berührt. Um das Eindrehen des Bolzens 12 von Hand zu ermöglich, ist an dessen Kopf 18 ein Griff 18a angebracht.

Zur Erzeugung einer Spannkraft zwischen dem Kopf 18 und dem ersten Bauteil 3 dient eine Hebelanordnung, die über eine Stange 1 mit dem Kolben 2 eines Zylinders 5 verbunden ist. Dieser Zylinder 5 besitzt zur Betätigung des Kolbens 2 in Richtung "Spannen" des Schnellspanngliedes einen Anschlußstutzen 5a und zum "Entspannen" einen Anschlußstutzen 5b. Die beiden Stutzen 5a, 5b sind über Druckmittelleitungen und eine Steuereinrichtung 5c mit einem Druckmittelbehälter 5d verbunden. Der an dem ersten Bauteil 3 fest angeordnete Zylinder 5 betätigt über seinen Kolben 2 und die Stange 1 einen an dieser über ein Gelenk 15 verbundenen Hebel 14, der an seinem anderen Ende in einem Gelenk 13 gelagert ist. Dieses Gelenk 13 ist an einer über den Bolzen 12 geschobenen Hülse 21 angeordnet und am Kopf 18 abgestützt.

Wird der Zylinder 5 über den Anschlußstutzen 5a mit Druckmitteln beaufschlagt, so wird das Bauteil 3 unter elastischer Verformung der Dichtung 9 an das Bauteil 4 gepreßt (gestrichelt eingezeichnete Lage des Lenkers 16 und des Bauteils 3).

Durch Zufuhr des Druckmittels über den Anschlußstutzen 5b kann die Verspannung wieder gelöst werden, so daß die beiden Bauteile 3, 4 innerhalb sehr kurzer Zeit voneinander getrennt werden können.

In FIG 2 ist eine Schnellspannvorrichtung gezeigt, bei der im Gelenk 15 der Stange 1 zusätzlich zum Hebel 14 ein Ende eines weiteren Lenkers 16

angelenkt ist, dessen anderes Ende in einem an dem ersten Bauteil abgestützen Gelenk 17 gelagert ist. Dabei dient zur Abstützung ein Lagerkörper 11, der als Hülse ausgebildet und mittels Schrauben an dem Bauteil 3 befestigt ist oder als Stütze neben dem Bolzen 12 am Bauteil 3 angeordnet ist. Die Lenker 14 und 16 bilden eine Halbschere. Daher ist der Zy linder 5 über ein Gelenk 7 und einen Lagerkörper 7a an dem ersten Bauteil 3 beweglich befestigt.

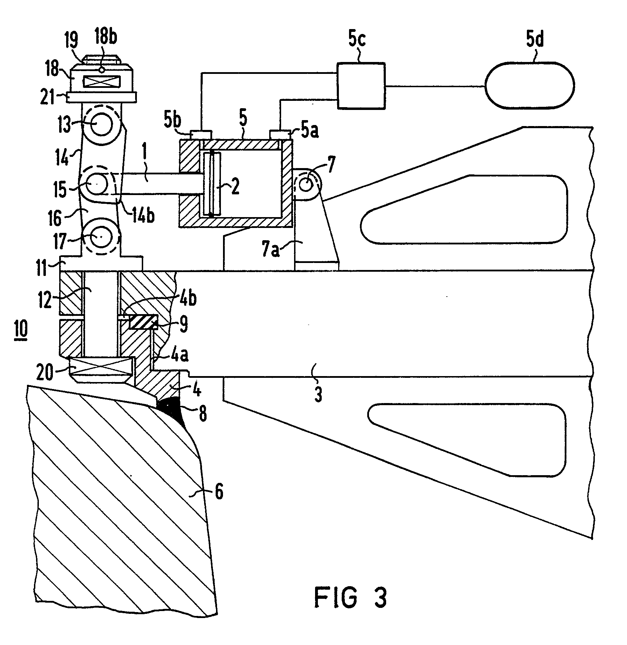

In FIG 3 ist eine lösbare Verbindung eines als Dichtscheibe ausgebildeten ersten Bauteils 3 mit einem als Flansch ausgebildeten zweiten Bauteil 4 gezeigt, der durch eine Schweißnaht 8 an der Mündung eines Rohrstutzens 6 eines Dampferzeugers befestigt ist. Zwischen dem ersten Bauteil 3 und dem Bauteil 4 ist eine ringartig ausgebildete Dichtung 9 angeordnet. In den Bauteilen 3 und 4 sind einander überdeckende Öffnungen 3a, 4a vorgesehen, die als Schlitze ausgebildet sind. Der Bolzen 12 des Schnellspanngliedes 10 trägt an seinem unteren Ende einen Hammerkopf 20, der durch die Schlitze hindurchgeführt und durch eine Drehung um 90° an dem als Flansch ausgebildeten zweiten Bauteil 4 verankerbar ist. Der Bolzen 12 des Schnellspanngliedes stützt sich an dem ersten Bauteil 3 über einen Stützkörper 11 ab. Dabei ist der an der Stange 1 über das Gelenk 15 gelagerte Lenker 16 in dem Gelenk 17 des Stützkörpers 11 gelagert. Andererseits ist die Stange 1 über das Gelenk 15 und den Lenker 14 sowie das Gelenk 13 mit einer am Kopf 18 des Bolzens 12 abgestützten Hülse 21 verbunden. Der Kopf 18 wird dabei durch eine Mutter gebildet, die in ein oberes Gewinde 19 des Bolzens 12 eingeschraubt ist. Die Lage des als Mutter ausgebildeten Kopfes 18 ist durch einen Splint 18b fixierbar.

Das Schnellspannglied ist in einer gespannten Lage dargestellt, in der der Kolben 2 über die Stange 1 das Gelenk 15 der Hebelanordnung über die Mittelebene des Bolzens 12 bis zu einem Anschlag 14b hinausbewegt und dadurch die Hebelanordnung in eine selbstsperrende Lage gedrückt hat.

Zum Entspannen der Schnellspannvorrichtung wird dem Zylinder 5 Druckmittel vom Behälter 5d über die Steuereinrichtung 5c und den Druckmittelstutzen 5b zugeführt. Der Kolben 2 bewegt sich dann in die entgegengesetzte Lage, so daß die Verspannung zwischem dem Stützkörper 11 und dem Hammerkopf 20 aufgehoben wird und die Verankerung des Schnellspanngliedes über den Hammerkopf 20 durch Drehen um 90° gelöst und das Bauteil 3 von dem Bauteil 4 abgehoben werden kann.

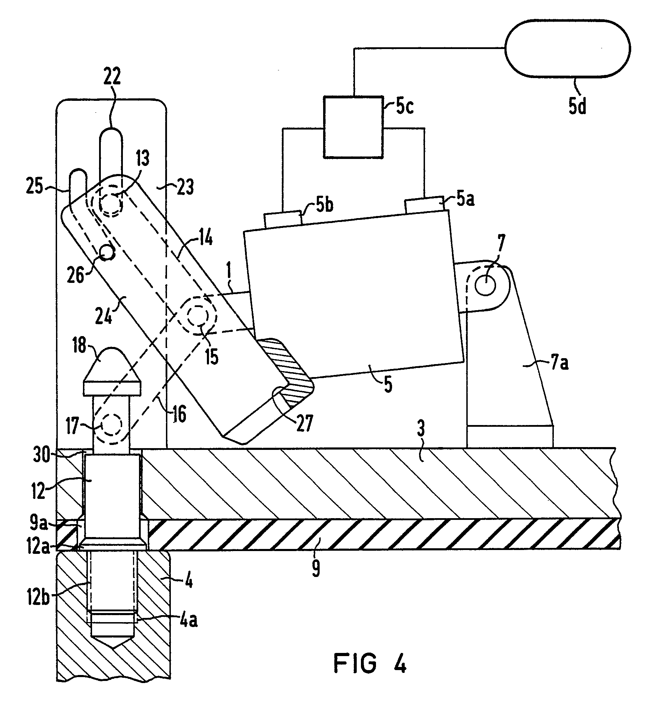

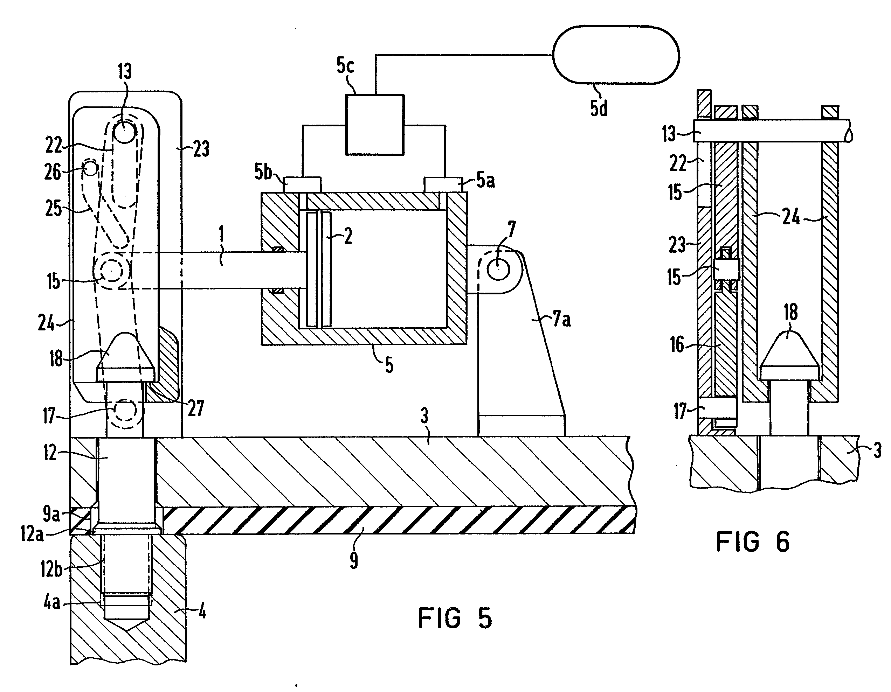

Bei der in FIG 4 gezeigten Schnellspannvorrichtung ist der Bolzen 12 in eine als zylindrische Bohrung ausgebildete Öffnung 4a des Bauteils 4 soweit eingeschraubt, daß seine als Bund ausgebildete Verdickung 12a an der Oberseite des Bauteils 4 anliegt. Auf das Bauteil 4 mit dem verankerten Bolzen 12 kann das mit Öffnungen 3a versehene Bauteil 3 und eine Dichtung 9 aufgelegt werden, wobei der Bolzen mit seinem Hals und den Kopf 18 durch die Öffnungen 9a der Dichtung 9 und die Öffnungen 3a des Bauteils 3 hindurchragt. Das Gelenk 13 der Hebelanordnung ist als Gelenkbolzen ausgebildet und in einem Langloch 22 einer am ersten Bauteil 3 angeordneten Stütze 23 geführt. An dieser Stütze 23 ist ein Schwinghebel 24 gelagert, der in einer Kulisse 25 in der Stütze 23 geführt ist, welcher ein an dem Schwinghebel 24 angeordneter Stift 26 zugeordnet ist. Das freie Ende des Schwinghebels 24 weist ein unter den Kopf 18 des Bolzens 12 führbare Nase 27 auf. Dabei ist die Bewegung des Schwinghebels 24 in Abhängigkeit von der Bewegung des als Gelenkbolzen ausgebildeten Gelenkes 17 derart steuerbar, daß nach dem Betätigen des Druckzylinders 5 im Sinne eines Spannens zunächst die Nase 27 unter den Kopf 18 des Bolzens 12 geschoben und dann der Spannvorgang ausgeführt wird (FIG 5, 6).

Beim Entspannvorgang untergreift die Nase 27 den Kopf 18 des Bolzens 12 bis zum völligen Entspannen und wird nach dem Entspannvorgang vom Kopf 18 weggeschwenkt.

Die in den FIG 4 bis 6 dargestellte Ausbildung ermöglicht eine erhebliche Montagezeitverkürzung beim wiederholten Anbringen und Entfernen des Bauteiles 3, vom Bauteil 4 da der Bolzen 12 beim Entfernen des Bauteiles 3 nicht entfernt zu werden braucht.

**Ansprüche**

1. Schnellspannvorrichtung zur lösbaren Verbindung zweier Bauteile (3, 4), bei der ein an dem einen Ende mit einem Kopf (18) und an dem anderen Ende mit einem Verankerungsmittel versehener Bolzen (12) durch eine Öffnung (3a) in dem ersten Bauteil (3) hindurchgeführt und in einer Öffnung (4a) im zweiten Bauteil (4) verankerbar ist und zur Erzeugung einer Spannkraft zwischen dem Kopf (18) und dem ersten Bauteil (3) eine Hebelanordnung dient, die über eine Stange (1) mit dem Kolben (2) eines Zylinders (5) verbunden ist, welcher durch ein Druckmittel betätigbar und an dem ersten Bauteil (3) angeordnet ist (FIG 1).

2. Schnellspannvorrichtung nach Anspruch 1 mit einer Hebelanordnung, bei der das eine Ende eines Lenkers (14) in einem an dem Kopf (18) des Bolzens (12) abgestützten Gelenk (13) und das andere Ende des Lenkers (14) in einem Gelenk (15) der Stange (1) gelagert ist.

3. Schnellspannvorrichtung nach Anspruch 1, bei der das am Kopf (18) abgestützte Gelenk (13) an einer über den Bolzen (12) geschobenen Hülse (21) angeordnet ist.

4. Schnellspannvorrichtung nach Anspruch 3, bei der unter Bildung einer Halbschere am dem Gelenk (15) der Stange (1) ein Ende eines weiteren Lenkers (16) angelenkt ist, dessen anderes Ende in einem an dem ersten Bauteil (3) abgestützten Gelenk (17) gelagert ist, und der Druckzylinder beweglich an dem ersten Bauteil (3) angeordnet ist (FIG 2).

5. Schnellspannvorrichtung nach Anspruch 1, bei der der Bolzen (12) mit einem Gewinde (12b) als Verankerungsmittel versehen ist.

6. Schnellspannvorrichtung nach Anspruch 5, bei der der Bolzen (12) am Ende des Gewindes (12b) mit einer Verdickung, insbesondere bundartigen Verdickung (12a) versehen ist.

7. Schnellspannvorrichtung nach Anspruch 1 - 4, bei der die Öffnungen (3a, 4a) in den beiden Bauteilen (3, 4) als Schlitze ausgebildet sind (FIG 3).

8. Schnellspannvorrichtung nach Anspruch 7, bei der an dem Bolzen (12) ein Stützkörper (11) geführt ist, an dem zur Abstützung an dem ersten Bauteil (3) der weitere Lenker (16) über das Gelenk (17) gelagert ist, wobei der Bolzen (12) als Verankerungsmittel mit einem Hammerkopf (20) versehen ist, der durch die deckungsgleichen Schlitze in dem ersten und zweiten Bauteil hindurchführbar, durch eine Drehung verriegelbar und durch Betätigen der Lenker (14, 16) mittels des Kolbens (2) gegen das Bauteil (3) verspannbar ist.

9. Schnellspannvorrichtung nach einem der vorhergehenden Ansprüche, bei der an der Hebelanordnung ein Anschlag (14b) derart angeordnet ist, daß beim Spannen der Hebelanordnung das Gelenk (15) zur Erzielung einer selbstsperrenden Wirkung etwas über die Mittenebene des Bolzens (12) hinausführbar ist.

10. Schnellspannvorrichtung nach Anspruch 4 oder 5, bei der das Gelenk (13) der Hebelanordnung als Gelenkbolzen ausgebildet und in einem Langloch (22) einer am ersten Bauteil (3) angeordneten Stütze (23) geführt ist, an der das Gelenk (17) gelagert ist, wobei an dem Gelenkbolzen ein in einer Kulisse (25) geführter Schwinghebel (24) gelagert ist, dessen freies Ende eine unter den Kopf (18) des Bolzens (12) führbaren Nase (27) aufweist, und der Schwinghebel (24) in Abhängigkeit von der Bewegung des Gelenkbolzens derart steuerbar ist, daß nach dem Betätigen des Druckzylinders (5) zum Spannen zunächst die Nase (27) unter den Kopf (18) des Bolzens (12) geschoben und dann der Spannvorgang ausgeführt wird und beim Entspannvorgang die Nase (27) den Kopf (18) des Bolzens (12) bis zum völligen Entspannen untergreift und nach dem Entspannvorgang vom Kopf (18) weggeschwenkt wird (FIG 4, 5, 6).

FIG 1

FIG 2

FIG 3

FIG 4

FIG 6

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 331 326  (STROUSS) <br> * Figuren; Anspruch 1 * | 1 | F 16 J   13/08 <br> B 25 B    5/12 <br> F 22 B   37/22 |
| A | | 5 | |
| Y | GB-A-  939 912  (TRANSFER TOOLS LTD) <br> * Figuren; Seite 1, Zeilen 11-38 * <br> --- | 1 | |
| A | DE-A-3 116 961  (MEWA) <br> --- | | |
| A | FR-A-2 574 975  (J.P. THOME) <br> ----- | | |

RECHERCHIERTE
SACHGEBIETE (Int. Cl.4)

F 16 J
F 22 B
B 25 B

Der vorliegende Recherchenbericht wurde für alle Patentansprüche erstellt

| Recherchenort | Abschlußdatum der Recherche | Prüfer |
|---|---|---|
| DEN HAAG | 25-05-1989 | NARMINIO A. |